(19) Europäisches Patentamt / European Patent Office / Office européen des brevets

(11) **EP 4 773 229 A1**

(12) **EUROPEAN PATENT APPLICATION**
published in accordance with Art. 153(4) EPC

(43) Date of publication:
**08.07.2026 Bulletin 2026/28**

(21) Application number: **24943690.8**

(22) Date of filing: **26.12.2024**

(51) International Patent Classification (IPC):
**H01M 4/36** $^{(2006.01)}$

(52) Cooperative Patent Classification (CPC):
Y02E 60/10

(86) International application number:
**PCT/CN2024/142823**

(87) International publication number:
**WO 2026/097681 (15.05.2026 Gazette 2026/20)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **07.11.2024 CN 202411586363**

(71) Applicant: **Beijing Easpring Material Technology Co., Ltd.**
**Beijing 100160 (CN)**

(72) Inventors:
• **HU, Yiseng**
  **Beijing 100160 (CN)**
• **ZHANG, Mingjun**
  **Beijing 100160 (CN)**
• **FU, Haikuan**
  **Beijing 100160 (CN)**
• **LI, Shanshan**
  **Beijing 100160 (CN)**
• **SONG, Shunlin**
  **Beijing 100160 (CN)**
• **LIU, Yafei**
  **Beijing 100160 (CN)**
• **CHEN, Yanbin**
  **Beijing 100160 (CN)**

(74) Representative: **Nederlandsch Octrooibureau**
**P.O. Box 29720**
**2502 LS The Hague (NL)**

(54) **POSITIVE ELECTRODE MATERIAL AND PREPARATION METHOD THEREFOR, LITHIUM-ION BATTERY, AND ELECTRICAL DEVICE**

(57) The present disclosure belongs to the technical field of batteries, and specifically discloses a cathode material and a preparation method thereof, a lithium-ion battery, and an electrical device. The cathode material satisfies: $1.5 < Kn_{90} = (Ln_{90} - Ln_{10})/Ln_{50} < 4.5$; $0 < Ln_{10} < 2000$ Å; $Ln_{10} < Ln_{50} < 3000$ Å; and $Ln_{50} < Ln_{90} < 15000$ Å.

FIG. 1

**EP 4 773 229 A1**

**Description**

**PRIORITY INFORMATION**

This application claims priority and benefits to the Chinese patent application No. 202411586363.8 filed with the China National Intellectual Property Administration on November 7, 2024, which is incorporated herein by reference in its entirety.

**FIELD**

The present disclosure belongs to the technical field of batteries, and particularly relates to a cathode material and a preparation method thereof, a lithium-ion battery, and an electrical device.

**BACKGROUND**

In recent years, lithium iron phosphate materials have occupied a dominant position in the domestic battery field due to their absolute cost advantage and good safety, and have broad development prospects. However, lithium iron phosphate materials per se still have shortcomings: the polarity of phosphate is too strong, and the ability to bind lithium is too strong, resulting in a low diffusion coefficient, which affects the charge and discharge performance in low-temperature environments, making low-temperature performance, in particular at low battery charge (SOC) states, poor. In order to meet special application scenarios such as low temperature, some companies still choose to use more expensive ternary materials to prepare batteries. Although the low-temperature performance of the ternary materials is better than that of lithium iron phosphate materials, with the increasingly stringent market demand, the low-temperature performance of the materials still needs to be further improved on the existing basis.

At low temperatures, the diffusion coefficient of lithium ions inside the ternary material decreases, and the energy required for charge transfer increases, which manifests as high low-temperature impedance and poor low-temperature discharge capability. In the related technology, the low-temperature performance is improved by increasing the cobalt content or introducing solid electrolyte coating, but both of these methods will cause a significant increase in material costs, thereby reducing market competitiveness. Therefore, the low-temperature performance of cathode materials still needs to be further improved.

**SUMMARY**

The present disclosure aims to solve, at least to some certain extent, one of the technical problems in the related art. To this end, the present disclosure provides a cathode material and a preparation method thereof, a lithium-ion battery, and an electrical device with high capacity, good cycle retention rate, excellent low-temperature performance, simple operation, or low cost.

In a first aspect, the present disclosure provides a cathode material that satisfies: $1.5 < Kn_{90} = (Ln_{90}-Ln_{10})/Ln_{50} < 4.5$; $0 < Ln_{10} < 2000$ Å; $Ln_{10} < Ln_{50} < 3000$ Å; and $Ln_{50} < Ln_{90} < 15000$ Å, where: $Ln_{10}$, $Ln_{50}$, and $Ln_{90}$ are sub-grain sizes of the cathode material corresponding to number cumulative percentages of the sub-grain sizes Ln reaching 10%, 50%, and 90%, respectively, and $K_{n90}$ is sub-grain size distribution of the cathode material.

In the cathode material, the sub-grain size distribution is within the above range, which can effectively improve the kinetic performance and low-temperature performance of the cathode material.

In some embodiments, $500$ Å $< Ln_{10} < 2000$ Å; $2000$ Å $< Ln_{50} < 3000$ Å; and $5000$ Å $< Ln_{90} < 9000$ Å. By controlling the sub-grain size within the above range, it is beneficial to further improving the kinetic performance of the cathode material.

In some embodiments, $2.5 < Kn_{90} < 4.0$. As a result, it is facilitated to further improve the low-temperature performance and kinetic performance of the cathode material.

In some embodiments, a particle size P satisfies $1.0$ $\mu$m $< P < 2.0$ $\mu$m; and in other embodiments, $1.3$ $\mu$m $< P < 1.7$ $\mu$m. Within the above-mentioned particle size range, it is favorable for the particles to be sintered completely, thereby improving the conductivity and low-temperature performance of the cathode material.

In some embodiments, the cathode material has a volume distribution median particle size of D'50, where $1$ $\mu$m $< D'50 < 4$ $\mu$m.

In some embodiments, the cathode material includes a composition represented by Formula I: $Li_{1+a}(Ni_{x-}Co_yMn_zG_b)M_cO_2$ Formula I, where: $0 \leq a \leq 0.2$, $0 \leq b \leq 0.05$, $0 \leq c \leq 0.05$, $0.4 \leq x < 1$, $0 < y < 0.15$, and $0 \leq z < 0.5$; element G includes at least one of Zr, Ti, Y, W, Al, Nb, or Sr; and element M includes at least one of La, Zr, B, Nb, Ti, W, Si, Mg, or Al.

With the above chemical formula, the cathode material has a low cobalt content, low cost, and excellent low-temperature performance.

In some embodiments, the cathode material includes a matrix and a coating layer. The coating layer is disposed on at least a portion of a surface of the matrix; and the element M is mainly located in the coating layer. Thus, the stability of the cathode material can be further improved, and when used in lithium-ion batteries, the side reaction between the cathode material and the electrolyte can be reduced, thereby improving the cycle performance of the lithium-ion battery.

In some embodiments, a concentration of element cobalt on a surface of particles of the cathode material is greater than a concentration of element cobalt inside the particles. By regulating the cobalt concentration of the cathode material to form particles with high cobalt content on the surface and low cobalt content inside, the overall cobalt content in the cathode material can be made relatively low while maintaining better low-temperature performance, thereby reducing costs.

In some embodiments, in all metal elements other than lithium, a molar proportion of element cobalt is greater than 0% and less than or equal to 15%, such as greater than 0% and less than or equal to 10%. This can reduce the cobalt content and further reduce the cost.

In a second aspect, the present disclosure provides a method for preparing the cathode material. The method includes: mixing a nickel-cobalt-manganese precursor and a lithium salt to obtain a raw material mixture, and performing a first sintering on the raw material mixture in an oxygen-containing atmosphere at a temperature ranging from 700°C to 1000°C for 6 hours to 12 hours, to obtain an intermediate product; and mixing the intermediate product, a lithium source, and a cobalt source to obtain an intermediate product mixture, and performing a second sintering on the intermediate product mixture in an oxygen-containing atmosphere at a temperature ranging from 300°C to 800°C for 6 hours to 12 hours, to obtain the cathode material. A molar ratio of element lithium in the lithium source to element cobalt in the cobalt source is Y, where $0.5 < Y < 1.4$.

The preparation method is simple to operate and low in cost. When the prepared cathode material is used in a battery, the low-temperature performance, kinetic performance, and cycle performance of the battery can be improved.

According to an embodiment of the present disclosure, the molar ratio of the element lithium in the lithium source to the element cobalt in the cobalt source is Y, where $0.8 < Y < 1.2$. Within the above ratio range, a lithium cobalt oxide layer can be formed on the surface of the cathode material particles, increasing the cobalt content on the surface of the cathode material, thereby improving the lithium-ion transmission performance and improving the low-temperature performance.

According to an embodiment of the present disclosure, the lithium salt includes at least one of lithium carbonate or lithium hydroxide; in some embodiments, the lithium salt includes a mixed lithium salt of lithium carbonate and lithium hydroxide; and in some specific embodiments, the lithium salt includes a mixed lithium salt of lithium carbonate and lithium hydroxide with a molar ratio of element lithium in the lithium carbonate to element lithium in the lithium hydroxide ranging from 3: 7 to 8: 2. The use of the mixed lithium salt can combine the advantages of the two lithium salts, allowing single crystal particles to grow rapidly while maintaining good independence.

According to an embodiment of the present disclosure, a molar ratio of element cobalt in the cobalt source to a sum of elements nickel, cobalt, and manganese in the cathode material is less than 5%. In this way, the cobalt content on the surface of the cathode material can be increased, the lithium-ion transmission performance can be improved, and the low-temperature performance can be improved.

In some embodiments, the nickel-cobalt-manganese precursor has a volume distribution median particle size of D50, where $1\ \mu m < D50 < 3.5\ \mu m$.

The volume distribution median particle size D50 of the nickel-cobalt-manganese precursor is within the above range, which can reduce the adhesion between particles. In this way, the cathode material can have a higher capacity and better low-temperature performance, and when used in a battery, it can improve the cycle performance of the battery.

In some embodiments, the raw material mixture further includes a compound containing element G.

In some embodiments, the intermediate product mixture further includes a compound containing element M.

In some embodiments, the nickel-cobalt-manganese precursor includes at least one of nickel-cobalt-manganese oxide or nickel-cobalt-manganese hydroxide. Therefore, the source of materials is wide and easy to obtain.

In some embodiments, the compound containing element G includes at least one of an oxide, hydroxide or carbonate of the element G, and the element G includes at least one of Zr, Ti, Y, W, Al, Nb, or Sr. Therefore, the source of materials is wide, which is beneficial to improving the electrochemical performance of the cathode material.

In some embodiments, the cobalt source includes at least one of cobalt oxide, cobalt tetraoxide, cobalt oxyhydroxide, or cobalt hydroxide. Therefore, the source of materials is wide, which is conducive to improving the low-temperature performance of the cathode material.

In some embodiments, the lithium source includes at least one of lithium carbonate, lithium hydroxide, lithium phosphate, or lithium dihydrogen phosphate. As a result, the source of materials is wide and the cost is low.

In some embodiments, the compound containing element M includes at least one of an oxide, hydroxide or carbonate of the element M, and the element M includes at least one of La, Zr, B, Nb, Ti, W, Si, Mg, or Al. Therefore, the source of materials is wide, which is conducive to improving the low-temperature performance of the cathode material.

In a third aspect, the present disclosure provides a lithium-ion battery. The lithium-ion battery includes the cathode material according to the first aspect or the cathode material prepared by the method according to the second aspect of the present disclosure. Therefore, the lithium-ion battery has low cost and excellent low-temperature performance.

In a fourth aspect, the present disclosure provides an electrical device. The electrical device includes the lithium-ion battery according to the third aspect of the present disclosure. This electrical device has all the features and advantages of the lithium-ion battery described above, which will not be described in detail here.

## BRIEF DESCRIPTION OF THE DRAWINGS

FIG. 1 is an electron microscope image of a finished product of cathode material in Example 1 of the present disclosure.
FIG. 2 is an electron microscope image of a finished product of cathode material in Example 5 of the present disclosure.
FIG. 3 is an electron microscope image of a finished product of cathode material in Example 6 of the present disclosure.
FIG. 4 is an electron microscope image of a finished product of cathode material in Comparative Example 1 of the present disclosure.
FIG. 5 is a sub-grain size distribution graph of finished products of cathode materials in Example 1, Example 9, and Comparative Example 1 of the present disclosure.

## DETAILED DESCRIPTION

Embodiments of the present disclosure will now be described in detail, examples of which are illustrated in the accompanying drawings. The embodiments described below with reference to the accompanying drawings are exemplary and are intended to explain the present disclosure but should not be construed as limiting the present disclosure.

In a first aspect, the present disclosure provides a cathode material that satisfies: $1.5 < Kn_{90} = (Ln_{90} - Ln_{10})/Ln_{50} < 4.5$; $0 < Ln_{10} < 2000$ Å; $Ln_{10} < Ln_{50} < 3000$ Å; and $Ln_{50} < Ln_{90} < 15000$ Å, where: $Ln_{10}$, $Ln_{50}$, and $Ln_{90}$ are sub-grain sizes of the cathode material corresponding to number cumulative percentages of the sub-grain Ln sizes reaching 10%, 50%, and 90%, respectively, and $K_{n90}$ is sub-grain size distribution of the cathode material.

It should be noted that the sub-grain size Ln of the cathode material is obtained by performing size statistics on a powder X-ray diffraction pattern using fitting algorithm with Fundamental Parameter method. The powder X-ray diffraction pattern is obtained by powder X-ray diffraction measurement using CuKα radiation. $Ln_{50}$, as a physical quantity representing the median of the number distribution, can represent the size of the sub-grain size. The smaller sub-grain size indicates that the migration path of lithium ions in the cathode material is shorter, and the diffusion rate is higher, that is, the material has better kinetic performance. $Kn_{90}$ can reflect the uniformity of grain distribution. When $Kn_{90}$ is too large or too small, the conductivity of the material will deteriorate, the charge transfer impedance will increase, and the polarization will be aggravated, resulting in poor electrochemical performance of the material at low temperatures. If the sub-grain sizes $Ln_{10}$, $Ln_{50}$, and $Ln_{90}$ exceed the above ranges or $Kn_{90}$ does not meet the requirements, the low-temperature performance will deteriorate to a certain extent.

In general, when the sub-grain sizes $Ln_{10}$, $Ln_{50}$, $Ln_{90}$, and $Kn_{90}$ are within the above ranges, the cathode material has excellent kinetic performance and low-temperature performance.

In some embodiments, $500$ Å $< Ln_{10} < 2000$ Å; $2000$ Å $< Ln_{50} < 3000$ Å; and $5000$ Å $< Ln_{90} < 9000$ Å. In some specific examples, $Ln_{10}$ can be 600 Å, 800 Å, 1000 Å, 1200 Å, 1400 Å, 1600 Å, or 1800 Å, etc., $Ln_{50}$ can be 2100 Å, 2200 Å, 2300 Å, 2400 Å, 2500 Å, 2600 Å, 2700 Å, 2800 Å, or 2900 Å, etc., and $Ln_{90}$ can be 5500 Å, 6000 Å, 6500 Å, 7000 Å, 7500 Å, 8000 Å, or 8500 Å, etc. By controlling the sub-grain size within the above range, it is beneficial to further improving the kinetic performance of the cathode material.

In some embodiments, $2.5 < Kn_{90} < 4.0$. Specifically, $Kn_{90}$ can be 2.51, 2.6, 2.7, 2.8, 2.9, 3.0, 3.1, 3.2, 3.3, 3.4, 3.5, 3.6, 3.7, 3.8, 3.9, 3.99, etc. As a result, it is facilitated to further improve the low-temperature performance and kinetic performance of the cathode material.

In some embodiments, a particle size P satisfies $1.0$ μm $< P < 2.0$ μm; and in other embodiments, $1.3$ μm $< P < 1.7$ μm. In some specific examples, the particle size P may be 1.1 μm, 1.2 μm, 1.3 μm, 1.4 μm, 1.5 μm, 1.6 μm, or 1.7 μm, etc.

It should be noted that the particle size P refers to the average diameter calculated by converting the projected area of 500 random particles tested by electron microscopy into a standard circle of equal area. If the particle size is too large, the lithium-ion transmission path will increase, resulting in relatively poor electrical performance, and then deterioration of the low-temperature performance of the particles; if the particle size is too small, the sintering may be incomplete, and the adhesion between the particles will be relatively serious, which is not conducive to the formation of independent single crystal particles. Therefore, in order to obtain the best performance, the particle size can be controlled within an appropriate range. Within the above-mentioned particle size range, it is favorable for the particles to be sintered completely, thereby improving the conductivity and low-temperature performance of the cathode material.

In some embodiments, the above-mentioned cathode material may be a single crystal nickel-cobalt-manganese ternary cathode material.

In some embodiments, the cathode material includes a composition represented by Formula I: $Li_{1+a}(Ni_{x-}Co_yMn_zG_b)M_cO_2$ Formula I, where: $0 \leq a \leq 0.2$, $0 \leq b \leq 0.05$, $0 \leq c \leq 0.05$, $0.4 \leq x < 1$, $0 < y < 0.15$, and $0 \leq z < 0.5$; element G includes at least one of Zr, Ti, Y, W, Al, Nb, or Sr; and element M includes at least one of La, Zr, B, Nb, Ti, W, Si, Mg, or Al.

With the above chemical formula, the cathode material has a low cobalt content, low cost, and excellent low-temperature performance.

In some embodiments, the cathode material includes a matrix and a coating layer. The coating layer is disposed on at least a portion of a surface of the matrix; and the element M is mainly located in the coating layer. Thus, the stability of the cathode material can be further improved, and when used in lithium-ion batteries, the side reaction between the cathode material and the electrolyte can be reduced, thereby improving the cycle performance of the lithium-ion battery.

In some embodiments, the above-mentioned element G refers to an element with a sufficient doping depth to reach the interior of the particle, that is, a bulk doping element; and the element M is mainly located in the coating layer, which means that the element M is usually difficult to enter the crystal lattice of the cathode material, but is coated on the surface of the cathode material particles, or a small part of the element M diffuses into the interior near the surface of the cathode material particles.

In some embodiments, a concentration of element cobalt on a surface of particles of the cathode material is greater than a concentration of element cobalt inside the particles. By regulating the cobalt concentration of the cathode material to form particles with high cobalt content on the surface and low cobalt content inside, the overall cobalt content in the cathode material can be made relatively low while maintaining better low-temperature performance, thereby reducing costs.

In some embodiments, in all metal elements other than lithium, a molar proportion of element cobalt is greater than 0% and less than or equal to 15%, such as greater than 0% and less than or equal to 10%. For example, it can be 1%, 2%, 3%, 4%, 5%, 6%, 7%, 8%, 9% or 10%, etc. In this way, the cobalt content can be reduced to further reduce production costs while maintaining a high low-temperature discharge capacity retention rate and low low-temperature impedance.

As used herein, the expression "a surface of particles" refers to the part of the cathode material particles from the outer surface to the inside, which accounts for 10% of the particle diameter, and "inside the particles" refers to the part outside the above surface of the particles.

In some embodiments, EDS can be used to randomly select 10 detection points on the surface of the particles and inside the particles to test the cobalt content, and then the average value 1 of the cobalt content at the detection points of the surface of the particles and the average value 2 of the cobalt content at the detection points inside the particles are calculated. The average value 1 and the average value 2 represent the cobalt content on the surface of the particles and the cobalt content inside the particles, respectively.

In a second aspect, the present disclosure provides a method for preparing the cathode material. The method includes the following steps.

S1: mixing a nickel-cobalt-manganese precursor and a lithium salt to obtain a raw material mixture, and performing a first sintering on the raw material mixture in an oxygen-containing atmosphere at a temperature ranging from 700°C to 1000°C (such as 700°C, 800°C, 900°C, or 1000°C, etc.) for 6 hours to 12 hours (such as 6 hours, 7 hours, 8 hours, 9 hours, 10 hours, 11 hours, or 12 hours, etc.), to obtain an intermediate product.

In some embodiments, the nickel-cobalt-manganese precursor includes at least one of nickel-cobalt-manganese oxide or nickel-cobalt-manganese hydroxide. The nickel-cobalt-manganese precursor used in the present disclosure has an extremely low cobalt content. Although a cobalt source is added in subsequent steps, the cobalt content in a finished product of the cathode material is still relatively low. Therefore, it is facilitated to reduce costs while improving the low-temperature performance of the cathode material.

In some embodiments, the lithium salt includes at least one of lithium carbonate or lithium hydroxide. In some embodiments, the lithium salt includes a mixed lithium salt of lithium carbonate and lithium hydroxide. In other embodiments, the lithium salt includes a mixed lithium salt of lithium carbonate and lithium hydroxide with a molar ratio of element lithium in the lithium carbonate to element lithium in the lithium hydroxide ranging from 3: 7 to 8: 2. In some specific examples, the molar ratio of the element lithium in lithium carbonate to the element lithium in lithium hydroxide may be 3: 7, 4: 6, 5: 5, 6: 4, 7: 3, or 8: 2, etc.

It can be understood that during the sintering process of the cathode material, under the action of lithium salt and temperature, the primary fibers of the nickel-cobalt-manganese precursor will gradually grow and fuse to form multiple spheroid-like adhesion particles. As the sintering time goes by, the adhesion particles will gradually grow, and the boundaries between the particles will gradually become obvious and eventually separate to form multiple single crystal particles. The single crystal particles obtained by sintering pure lithium carbonate are easier to grow and easy to separate after adhesion, but the particle morphology is relatively irregular and the impedance is relatively high. The single crystal particles obtained by sintering pure lithium hydroxide have regular morphology and low impedance, but are relatively difficult to grow and relatively difficult to separate after adhesion, which may affect the high-temperature cycle performance. The use of mixed lithium salts can combine the advantages of the two lithium salts, allowing the single crystal particles to maintain good independence while growing rapidly.

In some embodiments, the compound containing element G in this step may be added or not added according to the needs of use. That is, when doping elements are not required, the raw material mixture in this step may only include nickel-cobalt-manganese precursor and lithium salt; when doping elements are required, the raw material mixture in this step includes nickel-cobalt-manganese precursor, lithium salt, and the compound containing element G.

In some embodiments, the compound containing element G includes at least one of an oxide, hydroxide or carbonate of the element G, and the element G includes at least one of Zr, Ti, Y, W, Al, Nb, or Sr. As some specific examples, the compound containing element G may be $ZrO_2$, $Y_2O_3$, or $Al_2O_3$, etc. This enables the bulk doping, thereby improving the electrochemical performance of the cathode material.

In some embodiments, the oxygen-containing atmosphere may be air or oxygen atmosphere, which may be flexibly selected according to actual needs.

In some embodiments, a crushing step is further included after the first sintering. Specifically, the crushing equipment is one or more of a soybean milk machine, a jaw crusher, a roller crusher, a colloid mill, a mechanical mill, or a jet mill. This can reduce the particle size of the intermediate product, which is beneficial for subsequent operations.

In some embodiments, the nickel-cobalt-manganese precursor has a volume distribution median particle size of D50, where 1 $\mu$m<D50<3.5 $\mu$m. In some specific examples, D50 may be 1.5 $\mu$m, 2 $\mu$m, 2.5 $\mu$m, or 3 $\mu$m, etc. Within the above range, the adhesion between particles can be reduced. In this way, the cathode material can have a higher capacity and better low-temperature performance, and when used in a battery, the cycle performance of the battery can be improved.

S2: mixing the intermediate product, a lithium source, and a cobalt source to obtain an intermediate product mixture, and performing a second sintering on the intermediate product mixture in an oxygen-containing atmosphere at a temperature ranging from 300°C to 800°C (such as 300°C, 400°C, 500°C, 600°C, 700°C, or 800°C, etc.) for 6 hours to 12 hours (such as 6 hours, 7 hours, 8 hours, 9 hours, 10 hours, 11 hours, or 12 hours, etc.), to obtain the cathode material.

In some embodiments, the lithium source includes at least one of lithium carbonate, lithium hydroxide, lithium phosphate, or lithium dihydrogen phosphate. As a result, the source of materials is wide and the cost is low.

In some embodiments, the cobalt source includes at least one of cobalt oxide, cobalt trioxide, cobalt oxyhydroxide, or cobalt hydroxide. Therefore, the source of materials is wide, which is conducive to improving the low-temperature performance of the cathode material.

In some embodiments, a molar ratio of element cobalt in the cobalt source to a sum of elements nickel, cobalt, and manganese in the cathode material is less than 5%. That is, n (cobalt in the cobalt source): n (the sum of nickel, cobalt, and manganese in the finished product) is less than 5%, for example, it can be 1%, 2%, 3%, or 4%. In this way, the cobalt content of the cathode material can be decreased, and the cost can be reduced.

In some embodiments, a molar ratio of element lithium in the lithium source to element cobalt in the cobalt source is Y, where 0.5<Y<1.4. In some specific embodiments, 0.8<Y<1.2. Specifically, Y can be 0.6, 0.7, 0.8, 0.9, 1, 1.1, 1.2, 1.3, etc.

The cobalt source and the lithium source are added to form a lithium cobalt oxide layer on the surface of the material by using trace amounts of cobalt, increasing the cobalt content on the surface of the cathode material, thereby improving the lithium-ion transmission performance and improving the low-temperature performance. If Y is too low, the added cobalt source may not be able to fully react with lithium, the improvement effect is not ideal, and it may compete for lithium in the bulk phase, resulting in aggravated lithium-nickel disorder in the material. If Y is too high, there may be too much residual lithium on the surface, and the processing performance and the cycle performance of the battery are not ideal. When Y is within the above range, the low-temperature performance of the cathode material can be effectively improved without substantially affecting other performances.

In some embodiments, the compound containing element M includes at least one of an oxide, hydroxide or carbonate of element M, and the element M includes at least one of La, Zr, B, Nb, Ti, W, Si, Mg, or Al. As some specific examples, the compound containing element M may be $Al_2O_3$, $TiO_2$, or $WO_3$, etc. Therefore, the source of materials is wide, which is conducive to improving the low-temperature performance of the cathode material.

It should be noted that, in this step, the compound containing element M may be added or not added according to actual needs. That is, when a compound containing element M is needed, the intermediate product, lithium source, cobalt source, and compound containing element M are mixed and subjected to a second sintering in this step. When a compound containing element M is not needed, the intermediate product, lithium source, and cobalt source are mixed and subjected to a second sintering in this step. It can be understood that the cathode material may include a matrix and a coating layer provided on at least a portion of the surface of the matrix, and the element M is mainly located in the coating layer.

In some embodiments, the cathode material has a volume distribution median particle size of D'50, 1 $\mu$m<D'50<4 $\mu$m. In some specific examples, D'50 may be 1.5 $\mu$m, 2 $\mu$m, 2.5 $\mu$m, 3 $\mu$m, or 3.5 $\mu$m, etc. Within the above range, the adhesion between particles can be reduced. In this way, the cathode material can have a higher capacity and better low-temperature performance, and when used in a battery, the cycle performance of the battery can be improved.

In some embodiments, the particle size increase rate $X=(D'50-D50)/D50$, and $X<0.25$. Specifically, the particle size increase rate $X$ can be 0.01, 0.05, 0.1, 0.15, or 0.2, etc. When the particle size increase rate is within the above range, the particle adhesion phenomenon is slight or even absent, which is beneficial to improving the electrical performance of the cathode material.

In some embodiments, $(D'50-D50)/P<0.7$. Specifically, $(D'50-D50)/P$ may be 0.65, 0.6, 0.55, 0.5, 0.45, 0.4, 0.35, 0.3, 0.25, 0.2, 0.15, 0.1, and the like. In this way, the adhesion between particles can be reduced, and a cathode material with better low-temperature performance can be obtained.

The volume distribution median particle sizes D50 of the nickel-cobalt-manganese precursor and D'50 of the cathode material are obtained by testing with a Malvern particle size analyzer. The single crystal particles prepared using nickel-cobalt-manganese precursors with smaller particle sizes have better independence and higher roundness, and have advantages in electrical performance (in particular capacity and low-temperature performance). When the particle size P is equivalent, the difference between the D50 of the nickel-cobalt-manganese precursor and the D'50 of the single crystal nickel-cobalt-manganese ternary cathode material is within an appropriate range, which can avoid severe adhesion of particles and help improve the cycle performance of batteries using this cathode material.

The method for preparing the cathode material in the present disclosure includes mixing a nickel-cobalt-manganese precursor with a low cobalt content with a lithium salt and an additive, reacting the mixture through a high-temperature solid-phase method to obtain an intermediate product, crushing the intermediate product, uniformly mixing the crushed intermediate product with a lithium source, a cobalt source, and a compound, and then reacting the mixture through a high-temperature solid-phase method again to obtain a cathode material with a low cobalt content. Furthermore, during the preparation process, by controlling the type of lithium salt, the molar ratio Y of the lithium source and the cobalt source, the particle size P of the single crystal particles, the particle size increase rate X, and the parameters of the reaction conditions, the distribution of the sub-grain size in the cathode material is regulated, thereby achieving effective improvement in the low-temperature performance of the cathode material with a low cobalt content.

In a third aspect, the present disclosure provides a lithium-ion battery. The lithium-ion battery includes the cathode material according to the first aspect or the cathode material prepared by the method according to the second aspect of the present disclosure. Therefore, the lithium-ion battery has low cost and excellent low-temperature performance.

It should be understood that there is no particular limitation on the specific type of the lithium-ion battery, which may be a primary battery or a secondary battery; and the shape of the lithium-ion battery may be a cylindrical battery, a square battery, or a battery of any other shape, and according to the outer packaging classification, the lithium-ion battery may be a hard-shell battery, a soft-pack battery, etc.

Typically, a lithium-ion battery includes a cathode plate, an anode plate, an electrolyte, and a separator. The cathode plate, the anode plate, and the separator can be made into an electrode assembly through a winding or lamination process, and the electrode assembly and the electrolyte can be contained in an outer packaging. During the charge and discharge process of lithium-ion batteries, active ions intercalate and deintercalate back and forth between the cathode plate and the anode plate. The electrolyte conducts ions between the cathode plate and the anode plate. The separator is set between the cathode plate and the anode plate, mainly to prevent the cathode and anode from short-circuiting, while allowing ions to pass through.

In some embodiments, the cathode plate may include a cathode current collector and a cathode active material layer disposed on at least one side of a surface of the cathode current collector. The cathode active material layer includes a cathode active material, a conductive agent, and a binder, and the cathode current collector may include a metal foil, for example, the metal foil may be an aluminum foil. The cathode active material may include the cathode material according to the first aspect of the present disclosure or the cathode material prepared by the method according to the second aspect of the present disclosure. The conductive agent may include acetylene black, single-walled carbon nanotubes, and conventional materials in the art. The binder may be polyvinylidene fluoride (PVDF) or a conventional material in the art.

In some embodiments, the anode plate may include an anode current collector and an anode active material layer disposed on at least one side of a surface of the anode current collector. The anode active material layer may include an anode active material, a thickener, a conductive agent, and a binder. The anode current collector may be a metal foil, for example, the metal foil may be a copper foil. The anode active material may include artificial graphite, natural graphite, silicon-containing carbon-based composite materials, lithium-containing metal composite materials, lithium metal materials, and anode active materials commonly used in the art. The thickener can be sodium carboxymethylcellulose (CMC-Na) and conventional materials in the art. The conductive agent can be acetylene black and conventional materials in the art. The binder can be styrene-butadiene rubber and conventional materials in the art.

In some embodiments, the separator can be a separator known in the art that can be used in lithium-ion batteries and is stable to the electrolyte used, such as a polyethylene separator, a polypropylene separator, a polyethylene/polypropylene composite separator, etc.

In a fourth aspect, the present disclosure provides an electrical device. The electrical device includes the lithium-ion battery according to the third aspect of the present disclosure. This electrical device has all the features and advantages of the lithium-ion battery described above, which will not be described in detail here.

In some embodiments, the electrical devices may include mobile devices (such as mobile phones, laptops, etc.), electric vehicles (such as pure electric vehicles, hybrid electric vehicles, plug-in hybrid electric vehicles, electric bicycles, electric scooters, electric golf carts, electric trucks, etc.), electric trains, ships and satellites, energy storage systems, etc., but are not limited thereto.

The embodiments of the present disclosure are described in detail below.

**Example 1**

(1) Preparation of a single crystal nickel-cobalt-manganese ternary cathode material intermediate product: a mixed lithium salt of lithium carbonate and lithium hydroxide (the molar number of Li in lithium carbonate: the molar number of Li in lithium hydroxide = 7:3), a nickel-cobalt-manganese hydroxide precursor ($Ni_{0.6}Co_{0.05}Mn_{0.35}$)($OH$)$_2$ (D50 = 2.72 $\mu$m), and an additive $ZrO_2$ according to a molar ratio of 1.04: 1: 0.003 were uniformly mixed using a high-speed mixer. The mixture was subjected to a first sintering in an oxygen atmosphere at a sintering temperature of 970°C and a sintering duration of 10 hours. After sintering, the sintered material was crushed by a jet mill to obtain the single crystal nickel-cobalt-manganese ternary cathode material intermediate product.

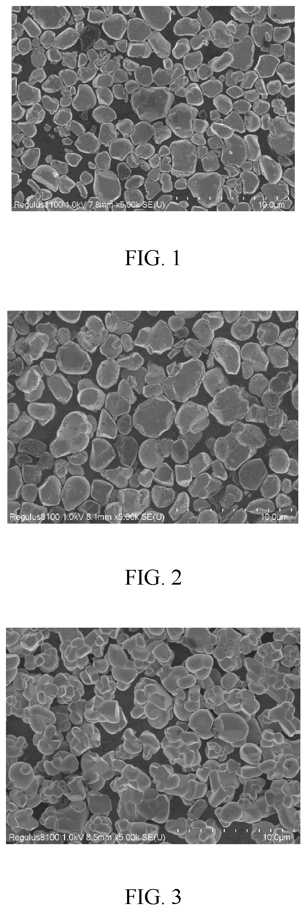

(2) Preparation of a finished product of a single crystal nickel-cobalt-manganese ternary cathode material: the cathode material intermediate product obtained in the above step was mixed evenly with an additive $Al_2O_3$, a lithium source lithium carbonate, and a cobalt source $Co(OH)_2$ according to a ratio of [n(Ni in the precursor) + n(Co in the precursor) + n(Mn in the precursor)] (which can be abbreviated as [n(Ni) + n(Co) + n(Mn)]): n($Al_2O_3$): n(Li in the lithium source): n(Co in the cobalt source) = 1: 0.001: 0.01: 0.01 using a high-speed mixer. The mixture was then subjected to a second sintering in an oxygen atmosphere at a sintering temperature of 700°C and a sintering duration of 8 hours. After sintering, the sintered material was crushed by a colloidal mill to obtain the finished product of the single crystal nickel-cobalt-manganese ternary cathode material with D'50 = 3.08 $\mu$m. The specific indicators were shown in Table 1, and the electron microscope image was shown in FIG. 1.

**Example 2**

Example 2 differs from Example 1 in that the temperature of the first sintering in step (1) was adjusted to 987°C, and a finished product with D'50=3.14 was obtained, as shown in Table 1.

**Example 3**

Example 3 differs from Example 1 in that in step (1), the composition of the nickel-cobalt-manganese precursor was adjusted to Ni: Co: Mn=60: 10: 30 (molar ratio), a precursor with D50=2.94 $\mu$m was used, and a finished product with D'50=3.44 $\mu$m was obtained by adjusting the crushing strength of the colloidal mill, as shown in Table 1.

**Example 4**

Example 4 differs from Example 1 in that the lithium salt ratio in step (1) was adjusted to: the molar number of Li in lithium carbonate: the molar number of Li in lithium hydroxide = 9: 1, and a finished product with D'50 = 3.11 $\mu$m was obtained, as shown in Table 1.

**Example 5**

Example 5 differs from Example 1 in that the lithium salt in step (1) was adjusted to pure lithium carbonate, and a finished product with D'50 = 3.04 $\mu$m was obtained, as shown in Table 1. The electron microscope image was shown in FIG. 2.

**Example 6**

Example 6 differs from Example 1 in that the lithium salt in step (1) was adjusted to pure lithium hydroxide, and a finished product with D'50 = 3.08 $\mu$m was obtained, as shown in Table 1. The electron microscope image was shown in FIG. 3.

## Example 7

Example 7 differs from Example 1 in that: in step (1), the composition of the nickel-cobalt-manganese precursor was adjusted to Ni: Co: Mn=86: 6: 8 (molar ratio), D50=2.18 $\mu$m, additive $Y_2O_3$ was added in addition to the additive $ZrO_2$, the addition ratio of lithium salt, nickel-cobalt-manganese precursor, $ZrO_2$, and $Y_2O_3$ was adjusted to 1.03: 1: 0.002: 0.001, the temperature of the first sintering was adjusted to 880°C, and the duration of the first sintering was 8h; in step (2), the additive was adjusted to $TiO_2$, the lithium source was adjusted to lithium hydroxide, the cobalt source was adjusted to $Co_3O_4$, [n(Ni in the precursor) + n(Co in the precursor) + n(Mn in the precursor)]: n($TiO_2$): n(Li in the lithium source): n(Co in the cobalt source) = 1: 0.001: 0.011: 0.01, the temperature of the second sintering was adjusted to 650°C, and a finished product with D'50 = 2.74 $\mu$m was obtained, as shown in Table 1.

## Example 8

Example 8 differs from Example 1 in that in step (1), additive $Al_2O_3$ was added in addition to the additive $ZrO_2$, the addition ratio of lithium salt, precursor, $ZrO_2$, and $Al_2O_3$ was adjusted to 1.05: 1: 0.002: 0.001, the temperature of the first sintering was adjusted to 955°C, the duration of the first sintering was 12 hours, and a finished product with D'50 = 3.19 $\mu$m was obtained, as shown in Table 1.

## Example 9

Example 9 differs from Example 1 in that in step (2), the additive was adjusted to $WO_3$, [n(Ni)+n(Co)+n(Mn)]: n($WO_3$): n(Li in the lithium source): n(Co in the cobalt source) = 1: 0.001: 0.01: 0.01, and a finished product D'50=3.12 $\mu$m was obtained, as shown in Table 1.

## Example 10

Example 10 differs from Example 1 in that in step (2), the cobalt source was adjusted to CoOOH, [n(Ni)+n(Co)+n(Mn)]: n($Al_2O_3$): n(Li in the lithium source): n(Co in the cobalt source)=1: 0.001: 0.007: 0.01, and a finished product D'50=3.11 $\mu$m was obtained, as shown in Table 1.

## Example 11

Example 11 differs from Example 1 in that in step (2), the lithium source was adjusted to lithium phosphate, as shown in Table 1.

## Example 12

Example 12 differs from Example 1 in that: in step (1), the temperature of the first sintering was 965°C and the duration of the first sintering was 11h; in step (2), the additive M was adjusted to $WO_3$, [n(Ni)+n(Co)+n(Mn)]: n($WO_3$): n(Li in the lithium source): n(Co in the cobalt source)=1: 0.001: 0.013: 0.01, the temperature of the second sintering was adjusted to 620°C, the duration of the second sintering was adjusted to 7 hours, and a finished product with D'50=3.21 $\mu$m was obtained by adjusting the crushing conditions, as shown in Table 1.

## Comparative Example 1

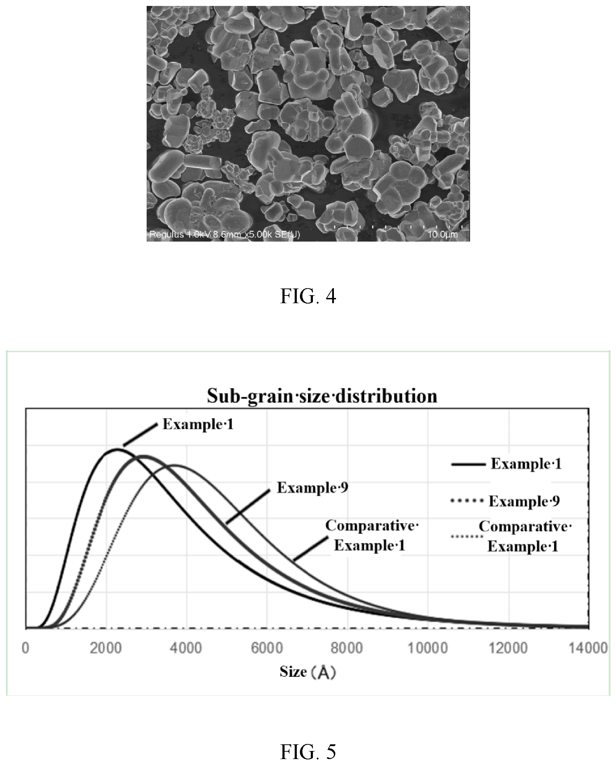

Comparative Example 1 differs from Example 1 in that the addition amount of the lithium source in step (2) was adjusted, resulting in [n(Ni) + n(Co) + n(Mn)]: n($Al_2O_3$): n(Li in the lithium source): n(Co in the cobalt source)=1: 0.001: 0.003: 0.01, and a finished product with D'50=3.18 $\mu$m was obtained, as shown in Table 1. The electron microscope image was shown in FIG. 4.

## Comparative Example 2

Comparative Example 2 differs from Example 1 in that the addition amount of the lithium source in step (2) was adjusted, resulting in [n(Ni) + n(Co) + n(Mn)]: n($Al_2O_3$): n(Li in the lithium source): n(Co in the cobalt source)=1: 0.001: 0.01: 0.005, and a finished product with D'50=3.07 $\mu$m was obtained, as shown in Table 1.

**Comparative Example 3**

Comparative Example 3 differs from Example 1 in that no lithium source was added in step (2), and a finished product with D'50 = 3.16 $\mu$m was obtained, as shown in Table 1. **Comparative Example 4**

Comparative Example 4 differs from Example 1 in that no cobalt source was added in step (2), and a finished product with D'50 = 3.10 $\mu$m was obtained, as shown in Table 1.

**Tests and equipments**

(1) Particle size D50, D'50: obtained by testing with Marvern's Mastersizer 3000 laser particle size analyzer.
(2) Electron microscopy test: obtained by scanning electron microscope S-4800 model of Hitachi HITACHI Company, Japan.
The projected area of each single crystal particle in the electron microscope was counted, and then its particle size was calculated. The specific method was as follows. The average diameter was calculated by converting the projected area of 500 random particles in the scanning electron microscope image into a standard circle of equal area, that is, the particle size P of the single crystal nickel-cobalt-manganese ternary cathode material.
(3) $Ln_{10}$, $Ln_{50}$, $Ln_{90}$, and $Ni^{2+}$ molar content: tested by Rigaku Smartlab 9KW Rotating-Target diffractometer, range 10-80°, voltage 40 kV, current 200 mA, step 0.02°, scan time 2 °/min. The test results were obtained by statistically calculating the crystallite size using the WPPF grain size distribution function of SmartLab Studio II software according to the Fundamental Parameter method (FP method). The sub-grain size distribution graphs of the finished products of the cathode materials in Example 1, Example 9, and Comparative Example 1 were shown in FIG. 5.
(4) Preparation of a battery and electrical performance test

In the above Examples and Comparative Examples, the electrochemical performance of the single crystal nickel-cobalt-manganese ternary cathode material was tested using a CR2025 button cell. The preparation process was as follows.

Preparation of an electrode plate: a cathode material, conductive carbon black, and polyvinylidene fluoride (PVDF) were thoroughly mixed with an appropriate amount of N-methylpyrrolidone (NMP) in a mass ratio of 95: 3: 2 to form a uniform electrode slurry (whose solid content at 25°C was 60%). The slurry was coated on an aluminum foil. The coated aluminum foil was dried at 120°C for 12 hours, and then stamped into a cathode plate with a diameter of 15.8 mm and a thickness of 3.2 mm using a pressure of 100 MPa. The loading amount of the cathode material was 15.5 mg/cm$^2$. In an argon-filled glove box with a water content and an oxygen content of less than 5 ppm, the cathode plate, the separator, the anode plate, and the electrolyte were assembled into a CR2025 button cell and left to stand for 6 hours. The anode plate was a metal lithium plate with a diameter of 15.8 mm and a thickness of 1 mm; the separator was a polypropylene microporous membrane (Celgard 2325) with a thickness of 25 $\mu$m; and the electrolyte was a mixture of equivalent amounts of 1 mol/L $LiPF_6$, ethylene carbonate (EC), and diethyl carbonate (DEC).

Capacity test: the electrochemical performance of CR2025 button batteries was tested using the Shenzhen Xinweier battery test system. The charge and discharge current density at 0.1C was 100 mA/g. The charge and discharge voltage range was controlled between 3.0 V and 4.4 V. At room temperature, the button battery was charged and discharged at 0.1C to evaluate the charge and discharge specific capacity of the single crystal nickel-cobalt-manganese ternary cathode material. In Example 7, a high nickel material was used, and its test voltage ranged from 3.0 V to 4.35 V.

High-temperature cycle performance test: in both the Examples and Comparative Examples, the charge and discharge voltage range was controlled to range from 3.0 V to 4.4 V. At a constant temperature of 60°C, the button battery was charged and discharged twice at 0.1C, and then charged and discharged 80 times at 1C to evaluate the high-temperature cycle capacity retention rate of the single crystal nickel-cobalt-manganese ternary cathode material. In Example 7, a high nickel material was used, and its cycle test voltage ranged from 3.0 V to 4.35 V.

Low-temperature performance test (all lithium-ion batteries were tested in the voltage range between 3.0 V and 4.4 V).

The -10°C low-temperature capacity retention rate test was performed by activating the button battery by charging and discharging for one cycle at 1C at 25°C, recording the discharge capacity A1 of charging and discharging of the second cycle at 1C, fully charging the button battery at 1C, then transferring the button battery to a -10°C constant temperature box and maintaining for 3 hours, discharging at 1C, and recording the discharge capacity as A2. The low-temperature capacity retention rate at -10°C was defined as A2/A1×100%.

The -10°C 10% SOC-DCR test was performed by activating the button battery by charging and discharging for one cycle at 1C at 25°C, charging the button battery to 10% SOC at 1C, transferring the button battery to a -10°C constant temperature box and leaving for 2 hours, and then discharging the button battery at 1C for 20 seconds. -10°C 10% SOC-DCR was defined as (voltage at the last second of the hold step - voltage after 20 seconds of discharge) / discharge current.

The -10°C 20% SOC-DCR test was performed by activating the button battery by charging and discharging for one cycle at 1C at 25°C, charging the button battery to 20% SOC at 1C, transferring the button battery to a -10°C constant temperature box and leaving for 2 hours, and then discharging the button battery at 1C for 20 seconds. -10°C 20% SOC-DCR was defined as (voltage at the last second of the hold step - voltage after 20 seconds of discharge) / discharge current.

The low-temperature discharge capability test was performed by activating the battery for one cycle at 0.1C (cut-off voltage: 4.45 V) at room temperature of 25°C, then charging the button battery to 10% SOC at 0.5C, transferring the button battery to a -10°C low-temperature cabinet and leaving for 1.5 hours, discharging the button battery to 3.0 V at 0.5C, and recording a duration of discharging to 3.0 V. The longer duration of discharging indicates that the low-temperature discharge capability is stronger.

Table 1 Preparation process of Examples and Comparative Examples

| Item | Unit | Example 1 | Example 2 | Example 3 | Example 4 | Example 5 | Example 6 | Example 7 | Example 8 |
|---|---|---|---|---|---|---|---|---|---|
| Composition of precursor: Ni: Co: Mn | / | 60: 5: 35 | 60: 5: 35 | 60: 10: 30 | 60: 5: 35 | 60: 5: 35 | 60: 5: 35 | 86: 6: 8 | 60: 5: 35 |
| Type of lithium salt: Li(lithium-carbonate): Li(lithium hydroxide) | / | 7: 3 | 7: 3 | 7: 3 | 9: 1 | Lithium carbonate | Lithium hydroxide | 7: 3 | 7: 3 |
| Additive G | / | $ZrO_2$ | $ZrO_2$ | $ZrO_2$ | $ZrO_2$ | $ZrO_2$ | $ZrO_2$ | $ZrO_{22}$ $Y_2O_3$ | $ZrO_{22}$ $Al_2O_3$ |
| Lithium salt: precursor: additive G | / | 1.04: 1: 0.003 | 1.04: 1: 0.003 | 1.04: 1: 0.003 | 1.04: 1:-0.003 | 1.04: 1:- 0.003 | 1.04: 1:-0.003 | 1.03: 1:-0.002: 0.001 | 1.05: 1:-0.002:-0.- 001 |
| Temperature of first sintering | °C | 970 | 987 | 970 | 970 | 970 | 970 | 880 | 955 |
| Duration of first sintering | h | 10 | 10 | 10 | 10 | 10 | 10 | 8 | 12 |
| Additive M | / | $Al_2O_3$ | $Al_2O_3$ | $Al_2O_3$ | $Al_2O_3$ | $Al_2O_3$ | $Al_2O_3$ | $TiO_2$ | $Al_2O_3$ |
| Lithium source | / | Lithium carbonate | Lithium carbonate | Lithium carbonate | Lithium carbonate | Lithium carbonate | Lithium carbonate | Lithium hydroxide | Lithium carbonate |
| Cobalt source | / | $Co(OH)_2$ | $Co(OH)_2$ | $Co(OH)_2$ | $Co(OH)_2$ | $Co(OH)_2$ | $Co(OH)_2$ | $Co_3O_4$ | $Co(OH)_2$ |
| [n(Ni)+n(Co)+n(Mn)]: n(M): | / | 1: 0.001: | 1: 0.001: | 1: 0.001: | 1: 0.001: | 1: 0.001: | 1: 0.001: | 1:0.001: | 1: 0.001: |
| n(Li in the lithium source): n(Co in the cobalt source) | | 0.01: 0.01 | 0.01: 0.01 | 0.01: 0.01 | 0.01: 0.01 | 0.01: 0.01 | 0.01:0.01 | 0.011: 0.01 | 0.01:-0.01 |
| Lithium source: cobalt source Y=n(Li)/n(Co) | / | 1.0 | 1.0 | 1.0 | 1.0 | 1.0 | 1.0 | 1.1 | 1.0 |
| Temperature of second sintering | °C | 700.0 | 700.0 | 700.0 | 700.0 | 700.0 | 700.0 | 650.0 | 700.0 |
| Duration of second sintering | h | 8 | 8 | 8 | 8 | 8 | 8 | 8 | 8 |

[Table 1 continued] Preparation process of Examples and Comparative Examples

| Item | Unit | Example 9 | Example 10 | Example 11 | Example 12 | Comparative Example 1 | Comparative Example 2 | Comparative Example 3 | Comparative Example 4 |
|---|---|---|---|---|---|---|---|---|---|
| Composition of precursor: Ni: Co: Mn | / | 60: 5: 35 | 60: 5: 35 | 60: 5: 35 | 60: 5: 35 | 60: 5: 35 | 60: 5: 35 | 60: 5: 35 | 60: 5: 35 |
| Type of lithium salt:-Li(lithium carbonate): Li(lithium hydroxide) | / | 7: 3 | 7: 3 | 7: 3 | 7: 3 | 7: 3 | 7: 3 | 7: 3 | 7: 3 |
| Additive G | / | $ZrO_2$ | $ZrO_2$ | $ZrO_2$ | $ZrO_2$ | $ZrO_2$ | $ZrO_2$ | $ZrO_2$ | $ZrO_2$ |
| Lithium salt: precursor: additive G | / | 1.04: 1: 0.003 | 1.04: 1: 0.003 | 1.04: 1: 0.003 | 1.04:1:. 0.003 | 1.04: 1: 0.003 | 1.04: 1: 0.003 | 1.04: 1: 0.003 | 1.04:1: 0.003 |
| Temperature of first sintering | °C | 970 | 970 | 970 | 965 | 970 | 970 | 970 | 970 |
| Duration of first sintering | h | 10 | 10 | 10 | 11 | 10 | 10 | 10 | 10 |
| Additive M | / | $WO_3$ | $Al_2O_3$ | $Al_2O_3$ | $WO_3$ | $Al_2O_3$ | $Al_2O_3$ | $Al_2O_3$ | $Al_2O_3$ |
| Lithium source | / | Lithium carbonate | Lithium carbonate | Lithium carbonate | Lithium carbonate | Lithium carbonate | Lithium carbonate | / | Lithium carbonate |
| Cobalt source | / | $Co(OH)_2$ | CoOOH | Co(OH), | $Co(OH)_2$ | $Co(OH)_2$ | $Co(OH)_2$ | $Co(OH)_2$ | / |
| [n(Ni)+n(Co)+n(Mn)]: n(M): n(Li in the lithium source): n(Co in the cobalt source) | / | 1: 0.001: 0.01: 0.01 | 1: 0.001: 0.007: 0.01 | 1: 0.001: 0.013: 0.01 | 1: 0.001: 0.003: 0.01 | 1: 0.001: 0.01: 0.005 | 1: 0.001: 0: 0.01 | 1: 0.001: 0.011: 0.01 | 1: 0.001: 0.01:0 |
| Lithium source: cobalt source Y= n(Li)/ n(Co) | / | 1.0 | 0.7 | 1.0 | 1.3 | 0.3 | 2.0 | 1.0 | 1.0 |
| Temperature of second sintering | °C | 700.0 | 700.0 | 700.0 | 620 | 700.0 | 700.0 | 700.0 | 700.0 |
| Duration of second sintering | h | 8 | 8 | 8 | 7 | 8 | 8 | 8 | 8 |

## [Table 2] Data from Examples and Comparative Examples

| Item | Precursor D50 | Finished product D'50 | Particle size P | Ni²⁺ | $Ln_{10}$ | $Ln_{50}$ | $Ln_{90}$ | $Kn_{90}$ | capacity at 0.1C | High-temperature capacity retention rate | Low-temperature capacity retention rate | Low-temperature 10% SOC-DCR | Low-temperature 20% SOC-DCR | Low-temperature discharge duration |
|---|---|---|---|---|---|---|---|---|---|---|---|---|---|---|
| Unit | μm | μm | μm | % | Å | Å | Å | / | mAh/g | % | % | Ω | Ω | s |
| Example 1 | 2.72 | 3.08 | 1.54 | 2.4 | 1458 | 2261 | 8389 | 3.1 | 200.4 | 97.4 | 86.3 | 83.2 | 148.4 | 142 |
| Example 2 | 2.72 | 3.14 | 1.93 | 3.6 | 1933 | 2489 | 9841 | 3.2 | 197.6 | 96.9 | 83.0 | 132.1 | 198.6 | 119 |
| Example 3 | 2.94 | 3.44 | 1.51 | 2.2 | 1161 | 1773 | 7235 | 3.4 | 200.9 | 96.6 | 85.4 | 101.2 | 165.3 | 129 |
| Example 4 | 2.72 | 3.11 | 1.58 | 2.6 | 1321 | 1523 | 7624 | 4.1 | 199.2 | 96.3 | 84.4 | 106.7 | 172.4 | 122 |
| Example 5 | 2.72 | 3.04 | 1.75 | 3.4 | 1451 | 1966 | 6992 | 2.8 | 198.9 | 95.4 | 83.2 | 122.5 | 184.8 | 109 |
| Example 6 | 2.72 | 3.08 | 1.31 | 3.8 | 1423 | 1683 | 7843 | 3.8 | 199.4 | 94.4 | 84.7 | 107.8 | 172.3 | 127 |
| Example 7 | 2.18 | 2.74 | 1.54 | 1.9 | 923 | 2542 | 8424 | 2.9 | 209.2 | 95.1 | 88.2 | 75,5 | 127.9 | 151 |
| Example 8 | 2.72 | 3.19 | 1.47 | 3.3 | 1086 | 1835 | 8024 | 3.7 | 199.8 | 96.4 | 85.3 | 99.2 | 168.8 | 127 |
| Example 9 | 2.72 | 3.12 | 1.54 | 3.2 | 1954 | 2650 | 7357 | 2.0 | 200.2 | 97.1 | 85.7 | 86.9 | 156.5 | 138 |
| Example 10 | 2.72 | 3.11 | 1.54 | 2.6 | 1458 | 2759 | 12389 | 4.0 | 198.9 | 95.7 | 85.1 | 107.7 | 174.6 | 121 |
| Example 11 | 2.72 | 3.09 | 1.54 | 2.9 | 1954 | 2568 | 7357 | 2.1 | 199.4 | 97.1 | 84.2 | 121.2 | 181.7 | 111 |
| Example 12 | 2.72 | 3.21 | 1.47 | 2.1 | 1324 | 2223 | 10890 | 4.3 | 200.2 | 95.4 | 84.1 | 111.5 | 179.3 | 119 |
| Comparative Example 1 | 2.72 | 3.08 | 1.54 | 3.4 | 2312 | 3771 | 7224 | 1.3 | 196.6 | 93.4 | 80.6 | 208.2 | 275.1 | 79 |
| Comparative Example 2 | 2.72 | 3.14 | 1.54 | 4.7 | 1953 | 3421 | 7852 | 1.7 | 198.3 | 93.1 | 81.2 | 206.1 | 279.2 | 73 |
| Comparative Example 3 | 2.72 | 3.44 | 1.54 | 3.9 | 2142 | 3325 | 6266 | 1.2 | 195.4 | 92.6 | 78.3 | 225.5 | 302.1 | 61 |
| Comparative Example 4 | 2.72 | 3.11 | 1.54 | 7.3 | 3132 | 3841 | 5875 | 0.7 | 198.6 | 92.7 | 80.8 | 201.7 | 273.5 | 68 |

As shown in Table 2, for all Examples 1 to 12, the process parameters were adjusted within the range allowed by the scheme, including the precursor nickel-cobalt-manganese composition, the type and amount of lithium salt added during the first sintering, the types of cobalt sources and lithium sources, the types of additives, etc., and all can meet the purpose of this scheme to improve the low-temperature performance (low-temperature capacity retention rate, low-temperature low SOC-DCR, and low-temperature discharge capacity). However, in Example 2, the increase in sintering temperature results in sintered particles with larger particle size and an increase in lithium ion transmission paths, which leads to a decrease in capacity and an increase in low-temperature impedance. Compared with Examples 1 and 3, the cobalt content of the nickel-cobalt-manganese precursor in Example 3 is doubled compared with the cobalt content of the nickel-cobalt-manganese precursor in Example 1, but Ln50 is too small, resulting in a low-temperature performance level close to or even slightly worse than that of Example 1, indicating that this solution has a more obvious effect on improving the performance (in particular low-temperature performance) of low-cobalt materials. A comparison of Examples 1, 5, and 6 reveals that the electrical properties of the finished products prepared by using pure lithium carbonate or pure lithium hydroxide as lithium salts are slightly worse than those of the finished products prepared by mixing the two. In Example 5, pure lithium carbonate is used, which has a higher melting temperature and is more likely to react on the surface. The prepared particle size will be larger (as shown in FIG. 2), and the lithium ion transmission capacity is poor, resulting in higher impedance and poor low-temperature capacity retention rate. In Example 6, pure lithium hydroxide is used, which has a lower melting temperature and has sufficient time to penetrate into the interior of the precursor. In this way, the cathode material particles grow from the inside to the outside. Therefore, the sintered particles will have smaller particle size and some particles will still be in a quasi-single crystal state (as shown in FIG. 3). Although the low-temperature performance is better, the high-temperature cycle life will be worse. In Examples 8 and 9, the doping additives and coating additives were adjusted, respectively. The adjusted additive types and sintering conditions in Example 8 result in $Ln_{50}$ being too small. Although the overall performance is better, it still lags behind that of Example 1. In Example 9, only the coating elements are changed, which causes that the performance thereof is closer to Example 1 and it has excellent low-temperature performance. In Example 10, the type of cobalt source and the ratio of lithium source to cobalt source are adjusted within the scope allowed by the scheme, and the performance of the prepared finished product is basically unaffected. However, relatively speaking, when the lithium-cobalt ratio Y satisfies $0.8<Y<1.2$, the low-temperature performance is better. In Example 11, the lithium source lithium carbonate is changed to lithium phosphate. Although the introduction of phosphate stabilizes the structure to a certain extent and has similar high-temperature cycle performance as Example 1, the lithium ion transmission capacity is limited, the capacity is slightly reduced, and the low-temperature DCR is also increased.

As shown in Comparative Examples 1 and 2, if the lithium-cobalt ratio is lower or higher than the range allowed by this scheme, the product performance such as capacity, cycle performance, and low-temperature performance will be affected. If the lithium-cobalt ratio is too low, the excess cobalt will consume the lithium in the cathode material particles, resulting in a decrease in the material capacity. At the same time, due to the deintercalation of lithium, the degree of lithium-nickel disorder of the material will increase, the low-temperature retention rate will deteriorate, and the low-temperature impedance will increase. If the lithium-cobalt ratio is too high, it will lead to excessive lithium, and a large amount of lithium will be enriched on the surface of the cathode particles, causing the slurry viscosity to surge, jelly and other problems in the material homogenization process, and its high-temperature cycle performance will also be greatly affected. In Comparative Examples 3, a lithium source is not added during the coating process, and in Comparative Examples 4, a cobalt source is not added during the coating process. The principle is the same as the limit conditions of the lithium-cobalt ratio in Comparative Examples 1 and 2.

Both low-temperature capacity retention rate and low-temperature SOC-DCR reflect the low-temperature performance of the material. The higher low-temperature capacity retention rate indicates that the low-temperature impedance is lower, and the low-temperature performance is better. The quality of low-temperature performance can also be demonstrated by low-temperature discharge capability. In an environment where the temperature is too low, the battery's energy is difficult to exert and the discharge time is short. Therefore, the low-temperature performance of the battery can be evaluated by the discharge time. The low-temperature discharge capability law of the Examples and the Comparative Examples is consistent with the low-temperature low SOC-DCR law.

The sub-grain size obtained by XRD refinement reflects that the size of the material grains can reflect the low-temperature change law to a certain extent. In the above Comparative Examples and Examples, the batches with high low-temperature discharge capacity retention rate and low low-temperature impedance all meet $Ln_{10}<2000$ Å, $Ln_{50}<3000$ Å, and $Kn_{90}=(Ln_{90}-Ln_{10})/Ln_{50}>1.5$.

In the description of the present disclosure, the terms "first" and "second" are used for descriptive purposes only and are not to be construed as indicating or implying relative importance or implicitly indicating the number of technical features indicated. Thus, a feature defined as "first" or "second" may explicitly or implicitly include at least one such feature. In the description of the present disclosure, the meaning of "plurality" is at least two, e.g. two, three, etc., unless specifically and specifically limited otherwise.

In the specification, the description of the reference terms such as "one embodiment", "some embodiments", "example", "specific example", or "some examples" means that the specific features, structures, materials, or characteristics described with reference to the embodiment or example are included in at least an embodiment or example of the present disclosure. In this specification, exemplary descriptions of the foregoing terms do not necessarily refer to the same embodiment or example. Moreover, the specific features, structures, materials, or characteristics described may be combined in any one or more embodiments or examples in a suitable manner. Furthermore, those skilled in the art may combine different embodiments or examples and features of different embodiments or examples described in this specification, unless they are contradictory to each other.

Although embodiments of the present disclosure are illustrated and described above, it can be understood that the above embodiments are illustrative and should not be construed as limitations of the present disclosure. Those skilled in the art can make changes, modifications, substitutions, and variations to the above embodiments within the scope of the present disclosure.

**Claims**

1. A cathode material, wherein:

$$1.5 < Kn_{90} = (Ln_{90} - Ln_{10})/Ln_{50} < 4.5;$$

$$0 < Ln_{10} < 2000 \text{ Å};$$

$$Ln_{10} < Ln_{50} < 3000 \text{ Å};$$

and

$$Ln_{50} < Ln_{90} < 15000 \text{ Å},$$

where:

$Ln_{10}$, $Ln_{50}$, and $Ln_{90}$ are sub-grain sizes of the cathode material corresponding to number cumulative percentages of the sub-grain sizes Ln reaching 10%, 50%, and 90%, respectively, and
$K_{n90}$ is sub-grain size distribution of the cathode material.

2. The cathode material according to claim 1, wherein:

$$500 \text{ Å} < Ln_{10} < 2000 \text{ Å};$$

$$2000 \text{ Å} < Ln_{50} < 3000 \text{ Å};$$

and

$$5000 \text{ Å} < Ln_{90} < 9000 \text{ Å}.$$

3. The cathode material according to claim 1 or 2, wherein $2.5 < Kn_{90} < 4.0$.

4. The cathode material according to any one of claims 1 to 3, wherein a particle size P satisfies $1.0 \ \mu m < P < 2.0 \ \mu m$.

5. The cathode material according to claim 4, wherein $1.3 \ \mu m < P < 1.7 \ \mu m$.

6. The cathode material according to any one of claims 1 to 5, wherein the cathode material has a volume distribution median particle size of D'50, where $1 \ \mu m < D'50 < 4 \ \mu m$.

7. The cathode material according to any one of claims 1 to 6, comprising a composition represented by Formula I:

$$Li_{1+a}(Ni_xCo_yMn_zG_b)M_cO_2 \qquad \text{Formula I,}$$

where:

$$0 \leq a \leq 0.2;$$

$$0 \leq b \leq 0.05;$$

$$0 \leq c \leq 0.05;$$

$$0.4 \leq x < 1;$$

$$0 < y < 0.15;$$

$$0 \leq z < 0.5;$$

element G comprises at least one of Zr, Ti, Y, W, Al, Nb, or Sr; and
element M comprises at least one of La, Zr, B, Nb, Ti, W, Si, Mg, or Al.

8. The cathode material according to claim 7, comprising:

a matrix; and
a coating layer, wherein:

the coating layer is disposed on at least a portion of a surface of the matrix; and
the element M is mainly located in the coating layer.

9. The cathode material according to any one of claims 1 to 8, wherein a concentration of element cobalt on a surface of particles of the cathode material is greater than a concentration of element cobalt inside the particles.

10. The cathode material according to claim 9, wherein in all metal elements other than lithium, a molar proportion of element cobalt is greater than 0% and less than or equal to 15%.

11. The cathode material according to claim 9 or 10, wherein in all metal elements other than lithium, a molar proportion of element cobalt is greater than 0% and less than or equal to 10%.

12. A method for preparing the cathode material according to any one of claims 1 to 11, the method comprising:

mixing a nickel-cobalt-manganese precursor and a lithium salt to obtain a raw material mixture, and performing a first sintering on the raw material mixture in an oxygen-containing atmosphere at a temperature ranging from 700°C to 1000°C for 6 hours to 12 hours, to obtain an intermediate product; and
mixing the intermediate product, a lithium source, and a cobalt source to obtain an intermediate product mixture, and performing a second sintering on the intermediate product mixture in an oxygen-containing atmosphere at a temperature ranging from 300°C to 800°C for 6 hours to 12 hours, to obtain the cathode material, wherein a molar ratio of element lithium in the lithium source to element cobalt in the cobalt source is Y, where $0.5 < Y < 1.4$.

13. The method according to claim 12, wherein $0.8 < Y < 1.2$.

14. The method according to claim 12 or 13, wherein the lithium salt comprises at least one of lithium carbonate or lithium hydroxide.

15. The method according to claim 14, wherein the lithium salt comprises a mixed lithium salt of lithium carbonate and lithium hydroxide.

16. The method according to claim 15, wherein the lithium salt comprises the mixed lithium salt of lithium carbonate and lithium hydroxide with a molar ratio of element lithium in the lithium carbonate to element lithium in the lithium hydroxide ranging from 3: 7 to 8: 2.

17. The method according to any one of claims 12 to 16, wherein a molar ratio of element cobalt in the cobalt source to a sum of elements nickel, cobalt, and manganese in the cathode material is less than 5%.

18. The method according to any one of claims 12 to 17, wherein the nickel-cobalt-manganese precursor has a volume distribution median particle size of D50, where 1 $\mu$m<D50<3.5 $\mu$m.

19. The method according to any one of claims 12 to 18, satisfying at least one of the following conditions:

the raw material mixture further comprises a compound containing element G; or
the intermediate product mixture further comprises a compound containing element M.

20. The method according to claim 19, satisfying at least one of the following conditions:

the nickel-cobalt-manganese precursor comprises at least one of nickel-cobalt-manganese oxide or nickel-cobalt-manganese hydroxide;
the compound containing element G comprises at least one of an oxide, hydroxide or carbonate of the element G, wherein the element G comprises at least one of Zr, Ti, Y, W, Al, Nb, or Sr;
the cobalt source comprises at least one of cobalt oxide, cobalt tetraoxide, cobalt oxyhydroxide, or cobalt hydroxide;
the lithium source comprises at least one of lithium carbonate, lithium hydroxide, lithium phosphate, or lithium dihydrogen phosphate; or
the compound containing element M comprises at least one of an oxide, hydroxide or carbonate of the element M, wherein the element M comprises at least one of La, Zr, B, Nb, Ti, W, Si, Mg, or Al.

21. A lithium-ion battery, comprising:

the cathode material according to any one of claims 1 to 11, or
the cathode material prepared by the method according to any one of claims 12 to 20.

22. An electrical device, comprising the lithium-ion battery according to claim 21.

FIG. 1

FIG. 2

FIG. 3

FIG. 4

FIG. 5

## INTERNATIONAL SEARCH REPORT

International application No.

**PCT/CN2024/142823**

| A. | CLASSIFICATION OF SUBJECT MATTER |
|---|---|

H01M 4/36(2006.01)i; H01M 4/505(2010.01)i; H01M 10/0525(2010.01)i; H01M 4/525(2010.01)i; C10G 51/00(2006.01)i

According to International Patent Classification (IPC) or to both national classification and IPC

| B. | FIELDS SEARCHED |
|---|---|

Minimum documentation searched (classification system followed by classification symbols)

IPC: H01M 4/-; H01M 10/-; C10G 51/-

Documentation searched other than minimum documentation to the extent that such documents are included in the fields searched

Electronic data base consulted during the international search (name of data base and, where practicable, search terms used)

CNTXT, WPABSC, DWPI, USTXT, WOTXT, ENTXT, Web of Science, 中国期刊网全文数据库, CJFD: 当升材料, 胡贻僧, 张明俊, 付海宽, 李珊珊, 宋顺林, 刘亚飞, 陈彦彬, 电池, 正极, 阳极, 晶粒, 微晶, 颗粒, 尺寸, 大小, 粒径, 粒度, 直径, 镍钴锰, NiCoMn, 锂, Li, 钴, Co, battery, positive electrode, anode, positive pole, sub?grain, particle, crystallite, microcrystal, size, grain fineness, diameter, nickel cobalt manganese

| C. | DOCUMENTS CONSIDERED TO BE RELEVANT |
|---|---|

| Category* | Citation of document, with indication, where appropriate, of the relevant passages | Relevant to claim No. |
|---|---|---|
| PX | CN 119133429 A (BEIJING EASPRING MATERIAL TECHNOLOGY CO., LTD.) 13 December 2024 (2024-12-13) <br> claims 1-22 | 1-22 |
| X | CN 117913243 A (WANHUA CHEMICAL (YANTAI) BATTERY MATERIAL TECHNOLOGY CO., LTD. et al.) 19 April 2024 (2024-04-19) <br> description, paragraphs 6-20, and embodiment 1 | 1-22 |
| A | CN 117855427 A (BEIJING EASPRING MATERIAL TECHNOLOGY CO., LTD.) 09 April 2024 (2024-04-09) <br> comparative example 2 | 1-22 |
| A | CN 114383983 A (EVE ENERGY CO., LTD.) 22 April 2022 (2022-04-22) <br> description, paragraphs 9-25 | 1-22 |
| A | CN 115513451 A (CALB TECHNOLOGY RESEARCH CENTER (SHENZHEN) CO., LTD. et al.) 23 December 2022 (2022-12-23) <br> embodiment 1, and table 1 | 1-22 |

☑ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **12 June 2025** | **23 June 2025** |

| Name and mailing address of the ISA/CN | Authorized officer |
|---|---|
| **China National Intellectual Property Administration (ISA/CN)** <br> **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT

| | International application No. |
|---|---|
| | **PCT/CN2024/142823** |

| C. | DOCUMENTS CONSIDERED TO BE RELEVANT | |
|---|---|---|
| Category* | Citation of document, with indication, where appropriate, of the relevant passages | Relevant to claim No. |
| A | JP 2004303593 A (MITSUBISHI MATERIALS CORP.) 28 October 2004 (2004-10-28) description, paragraphs [0008]-[0014] | 1-22 |
| A | US 2024030414 A1 (LG ENERGY SOLUTION LTD.) 25 January 2024 (2024-01-25) embodiment 1 | 1-22 |

Form PCT/ISA/210 (second sheet) (July 2022)

**INTERNATIONAL SEARCH REPORT**
Information on patent family members

International application No.

**PCT/CN2024/142823**

| Patent document cited in search report | | | Publication date (day/month/year) | Patent family member(s) | | | Publication date (day/month/year) |
|---|---|---|---|---|---|---|---|
| CN | 119133429 | A | 13 December 2024 | CN | 119133429 | B | 07 February 2025 |
| CN | 117913243 | A | 19 April 2024 | | None | | |
| CN | 117855427 | A | 09 April 2024 | | None | | |
| CN | 114383983 | A | 22 April 2022 | CN | 114383983 | B | 18 June 2024 |
| CN | 115513451 | A | 23 December 2022 | | None | | |
| JP | 2004303593 | A | 28 October 2004 | JP | 4007228 | B2 | 14 November 2007 |
| US | 2024030414 | A1 | 25 January 2024 | JP | 2023551994 | A | 13 December 2023 |
| | | | | JP | 7678107 | B2 | 15 May 2025 |
| | | | | WO | 2022124762 | A1 | 16 June 2022 |

Form PCT/ISA/210 (patent family annex) (July 2022)

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202411586363